# FASCICULE DE BREVET EUROPEEN

(11) **EP 0 704 832 B1**
(45) Date de publication et mention de la délivrance du brevet: **03.07.2002**
(21) Numéro de dépôt: 95117504.1
(22) Date de dépôt: 01.10.1991
(51) Int. Cl.: G09B 5/10, G09B 7/04, G09B 7/073, H04H 9/00, H04N 7/00

(54) **Procédé pour matérialiser une interactivité virtuelle entre un individu et un support d'informations**
Verfahren zur Durchführung einer virtuellen Interaktivität zwischen einer Person und einem Datenträger
Method for realizing virtual interaction between an individual and a data carrier

(30) Priorité: 04.10.1990 FR 9012463; 12.04.1991 FR 9104763
(43) Date de publication de la demande: 03.04.1996
(62) Demande divisionnaire de: 91420346.8
(73) Titulaire: INFO TELECOM, F-67500 Vendenheim (FR)
(72) Inventeur: Schott, Michel, F-67500 Vendenheim (FR)
(74) Mandataire: Casalonga, Axel

(56) Documents cités:
- GB-A- 2 194 416
- US-A- 4 355 984

## Description

L'invention concerne un nouveau procédé, apte à permettre la réalisation et la matérialisation d'une interactivité virtuelle entre un individu et un support d'informations, tel que par exemple une émission de télévision.

Par "interactivité virtuelle" ou "pseudo-interactivité", on entend une interactivité apparente, non réelle, car ne résultant pas d'un échange d'informations bi-directionnel entre les deux entités entre lesquelles s'établit cette interactivité.

Il devient de plus en plus courant de rencontrer au niveau des différents supports d'informations à la disposition du public, des animations invitant les lecteurs, auditeurs, spectateurs ou télespectateurs de ces supports d'informations à interagir avec ceux-ci. Pour présenter quelque intérêt, cette interaction doit être en mesure d'arbitrer, de sanctionner voire de corriger les réponses, résultats, et autres choix de l'utilisateur au cours de ces épreuves et autres tests qui lui sont soumis. Ceci est particulièrement vrai dans le cadre de jeux utilisant comme support d'informations une émission télévisée ou radiophonique, au cours de laquelle, différents tests et autres jeux peuvent être proposés, et dont l'intérêt de l'interaction réside dans l'obtention des résultats de ces tests et jeux.

Or, toute interaction réelle suppose obligatoirement l'échange d'informations bi-directionnelles entre le support d'informations et l'utilisateur, de sorte que quelque soit le dispositif et les moyens envisagés pour aboutir à une telle interaction, les coûts de mise en oeuvre s'avèrent systématiquement prohibitifs.

Différents procédés ont été proposés à ce jour afin de permettre la réalisation d'une interaction réelle entre l'utilisateur et le support d'informations, notamment au niveau d'émissions de télévision. On a par exemple proposé d'utiliser un boîtier relié par un câble permettant de transmettre en temps réel les réponses de l'utilisateur au centre concepteur de l'émission.

Dans le document FR-A-2 626 731, on a proposé de réaliser une interaction virtuelle entre un utilisateur et un support d'informations, au moyen d'un dispositif électronique susceptible de capter des signaux émis par un poste de télévision et non décodables voire décelables tant visuellement qu'auditivement par le télespectateur, ces signaux étant destinés à télécharger ce dispositif avec des paramètres propres à chacun des jeux et autres tests proposés dans le cadre d'une émission particulière. De fait, il se crée un couplage particulier entre le récepteur de télévision et le dispositif électronique, ce couplage pouvant être de différente nature, à savoir optique, acoustique, voire électrique. Ce dispositif particulier permet ainsi la réalisation d'une interaction virtuelle entre l'utilisateur et le support d'informations compte tenu, qu'au fur et à mesure du déroulement de l'émission, l'utilisateur peut, par le biais d'un clavier intégré au dispositif, introduire les réponses et autres choix qui lui sont proposés, ces réponses et choix étant contrôlés en local.

Néanmoins, cette méthode d'interaction s'avère lourde à mettre en oeuvre, coûteuse et fastidieuse, de sorte qu'elle est difficilement utilisable. En effet, elle suppose la mise en place de structures de codage appropriées, ainsi que celle d'un récepteur et d'un décodeur au niveau du boîtier de l'utilisateur.

L'invention vise à pallier ces inconvénients. Elle propose un procédé apte à permettre la réalisation et la matérialisation d'une interactivité virtuelle entre un support d'informations et un utilisateur. Comme il apparaitra de manière plus explicite ultérieurement, cette interaction, apparemment réelle pour l'utilisateur, ne nécessite plus l'échange d'informations entre celui-ci et le support d'informations, de sorte que toute la lourdeur de mise en oeuvre de telles interactivités s'en trouve supprimée.

Tel que revendiqué, l'invention propose un procédé pour matérialiser une interactivité virtuelle entre d'une part, un utilisateur muni d'un boîtier électronique comprenant un circuit électronique équipé d'un générateur pseudo-aléatoire et un organe d'introduction de données, et d'autre part, un support d'informations proposant au moins une épreuve suggérant des réponses, dans lequel
- on génère au niveau du boîtier électronique une première suite de chiffres agencée selon une logique pseudo-aléatoire, par le biais du générateur intégré dans ledit circuit électronique, à partir au moins d'une première donnée et d'une donnée externe de co-ensemencement introduites dans ledit générateur, cette première suite de chiffres étant représentative d'une suite d'informations non accessibles par l'utilisateur, les réponses suggérées par l'épreuve dudit support d'informations étant corrélées directement ou indirectement avec cette première suite de chiffres;
- on transforme une suite de données introduites par l'utilisateur, par le biais de l'organe d'introduction de données, et représentatives des choix et réponses dudit utilisateur à ladite épreuve, sous la forme d'une deuxième suite de chiffres interprétables par rapport à la première suite de chiffres ;
- on compare les deux suites de chiffres au niveau du circuit électronique ; et
- on restitue au niveau du boîtier le résultat de cette comparaison sous la forme de signaux sensoriels.

La première donnée peut être une donnée dite d'horodatage issue d'une information d'horodatage.

L'information d'horodatage peut être délivrée par une horloge interne au boîtier ou par l'intermédiaire d'une réception de signaux radiodiffusés.

L'information d'horodatage est avantageusement obtenue en découpant le temps en intervalles déterminés, de grande amplitude.

Les intervalles déterminés sont de préférene choisis centrés sur les périodes d'utilisation du boîtier.

La comparaison entre les deux suites de chiffres peut s'effectuer pas à pas lors de l'introduction de la suite de données par l'utilisateur, ou bien globalement à la fin de l'épreuve.

Selon un mode de mise en oeuvre on introduit une donnée externe de paramétrage au niveau du générateur.

Selon un autre mode de mise en oeuvre on introduit dans le boîtier une donnée externe d'interprétation et on transforme ladite première suite de chiffres en utilisant ladite donnée externe d'interprétation, préalablement à son traitement comparatif avec la deuxième suite de chiffres.

On peut aussi introduire dans le boîtier électronique une donnée externe d'interprétation et on transforme ladite deuxième suite de chiffres en utilisant ladite donnée externe d'interprétation, préalablement à son traitement comparatif avec la première suite de chiffres.

Selon un mode de mise en oeuvre on introduit une donnée externe de synchronisation dans le boîtier électronique, qui agit comme signal de synchronisation afin d'assurer la correspondance entre le séquencement d'événements intervenant au niveau du support d'informations, et un séquencement déterminé par la première suite de chiffres issue du générateur pseudo-aléatoire.

La donnée externe est avantageusement introduite dans le boîtier par l'intermédiaire de l'organe d'introduction de données ou par l'intermédiaire d'une réception de signaux radiodiffusés.

Le support d'informations est par exemple une émission télévisée ou radiophonique.

Telle que revendiquée, l'invention propose aussi un boîtier électronique permettant la matérialisation d'une interactivité virtuelle entre un utilisateur et un support d'informations proposant au moins une épreuve suggérant des réponses, comprenant un circuit électronique comportant un générateur pseudo-aléatoire, et un organe d'introduction de données, des moyens de délivrance d'une première donnée et des moyens de réception d'une donnée externe de co-ensemencement, le générateur pseudo-aléatoire générant en réponse au moins à la première donnée et à la donnée externe de co-ensemencement, une première suite de chiffres agencée selon une logique pseudo-aléatoire, cette première suite étant représentative d'une suite d'informations non accessibles par l'utilisateur et corrélées directement ou indirectement aux réponses suggérées par l'épreuve dudit support d'informations, le circuit électronique comprenant en outre un microcontrôleur comportant des moyens de transformation d'une suite de données introduites par l'utilisateur par le biais de l'organe d'introduction de données, et représentatives des choix et réponses de celui-ci, sous la forme d'une deuxième suite de chiffres interprétables par rapport à la première suite de chiffres, ainsi qu'une section d'arbitrage et de contrôle pour comparer les deux suites de chiffres, et le boîtier comprenant en outre des moyens de restitution du résultat de cette comparaison sous la forme de signaux sensoriels.

Les moyens de réception de la donnée externe de co-ensemencement peuvent comporter l'organe d'introduction de données connecté au microcontrôleur.

Les moyens de délivrance de la première donnée comportent avantageusement une horloge interne délivrant une information d'horodatage.

Le boîtier comprend par exemple un récepteur de signaux radiodiffusés incorporant les moyens de réception de la donnée externe de co-ensemencement et/ou les moyens de délivrance de la première donnée.

Parmi les avantages de l'invention on peut citer celui qui permet de générer à partir d'un nombre réduit d'informations et via un générateur pseudo-aléatoire, des données : paramètres, règles, résultats, permettant d'interpréter et d'arbitrer une séquence introduite par l'utilisateur, la suite de données étant initialisée par une donnée commune appelée ensemencement, d'une part à tous les détenteurs du boîtiers électronique, et d'autre part, au support d'informations, afin d'obtenir une unicité au niveau de l'utilisation de cette suite.

Ainsi, connaissant l'algorithme de pseudo-génération identique pour tous les boîtiers électroniques, il devient alors possible, pour le réalisateur de l'émission ou l'éditeur du support d'informations, de prévoir toute sorte d'interaction possible, leur grande diversité étant une conséquence de la quasi-infinité de l'ensemencement du générateur pseudo-aléatoire.

Afin de limiter les conséquences d'une dérive temporelle, dont on ne peut s'affranchir totalement, même en utilisant des horloges à quartz, et qui tombe difficilement en dessous de 20 ppm (correspondant à environ dix minutes par an), on découpe avantageusement l'information d'horodatage en intervalles déterminés de grande amplitude. On diminue ainsi le nombre de frontières inter-intervalles, et en conséquence, les possibilités de chevauchement à leur niveau. On conçoit en effet, que lorsque l'information d'horodatage constitue la source d'ensemencement pour une émission donnée, une dérive temporelle trop importante génère une séquence pseudo-aléatoire différente de celle initialement prévue par le concepteur de l'émission, et que l'interaction utilisateur-émission devient faussée. D'autre part, il peut s'avérer que l'utilisation d'une donnée horodatée comme ensemencement ne permette pas de s'accomoder d'un décallage dans la programmation des émissions. Aussi, le fait que les intervalles déterminés soient choisis centrés sur les périodes d'utilisation du boîtier, c'est à dire pendant les périodes préalablement prévues de pseudo-interactivité, permet d'éliminer les risques d'interférence qui peuvent s'occasionner aux bornes desdits intervalles.

Selon l'invention, l'acquisition d'une donnée externe comme co-ensemencement, introduite au moyen de l'organe d'introduction de données, d'un récepteur de signaux radiodiffusés, ou d'un capteur, notamment acoustique, d'ondes électro-magnétiques, de chocs, de position, de température, permet d'adapter le fonctionnement du boîtier au déroulement d'au moins une épreuve du support d'informations. En outre, cette possibilité permet, lorsque l'ensemencement du générateur pseudo-aléatoire est constitué par une donnée d'horodatage valable pour une période de temps relativement étendue, et par exemple une journée, de néanmoins pouvoir réaliser plusieurs séquences d'interactions pendant cette période. Enfin, l'utilisation d'une donnée externe permet de limiter, voire d'annuler toute possibilité de détournement du procédé de pseudo-interactivité. En effet, l'utilisateur mal intentioné pourrait introduire un certain nombre de codes de manière totalement aléatoire, afin de générer des séries dont il peut faire l'analyse, en vue de détourner l'émission-support.

L'introduction de la donnée externe de paramétrage dans le boîtier peut ainsi servir par exemple en cas de report de la diffusion à une date ultérieure d'une émission pré-enregistrée. La donnée externe sert dans ce cas à corriger l'information d'horodatage avant son introduction dans le générateur, afin de le faire coïncider avec la date initiale de diffusion.

La donnée externe de synchronisation est par exemple utile dans certaines applications qui nécessitent la gestion d'une mise en phase temporelle entre les actions qui se déroulent au niveau du support d'informations et les évènements temporels régis par le générateur du boîtier.

Pour de telles applications, le commencement de l'interaction ne s'effectue que sur injonction d'un signal de synchronisation. Ce signal a pour effet de signaler le départ du chronomètre interne au boîtier, qui devient la base de temps sur laquelle se règlera le déroulement des actions intervenant au niveau du support d'informations ainsi que les évènements temporels régis par le générateur. Cette procédure assure un synchronisme parfait entre le comportement du boîtier et l'émission du support d'informations.

La manière dont l'invention peut être réalisée et les avantages qui en découlent, ressortiront mieux de l'exemple de réalisation qui suit, donné à titre indica-0 tif et non limitatif à l'appui des figures annexées.

La figure 1 est une représentation schématique du synoptique du fonctionnement du procédé de l'invention.

La figure 2 est une représentation schématique de 5 l'architecture électronique du boîtier utilisé dans le cadre de l'invention.

La figure 3 est une représentation schématique d'un générateur pseudo-aléatoire d'une forme de réalisation particulière de l'invention.

Bien que plus particulièrement décrit en liaison avec un support d'informations constitué par une émission de télévision, par le biais d'un récepteur TV, l'invention ne saurait se limiter à cette seule forme de réalisation, et il va de soi que tout autre support d'informations de ce type, tel que notamment une émission radiophonique, voire un terminal télématique, etc ..., entre dans le champ d'application de l'invention.

Dans le cadre de l'invention, on munit un boîtier électronique destiné à être utilisé par un télespectateur, d'un microcontrôleur dans lequel on intègre une fonction du générateur (1), destiné à générer une suite de signaux, et notamment de chiffres selon une séquence préalable déterminée. Cette suite peut être périodique. Plus spécifiquement, ce générateur gère un algorithme commun à tous les boîtiers utilisés par les différents télespectateurs. Afin d'obtenir une variation au niveau de la séquence de chiffres, il est nécessaire d'introduire au niveau du générateur (1) une donnée initialisatrice, également dénommée semence, qui permet l'activation du générateur et ainsi la délivrance d'une séquence de chiffres. Il est impératif bien entendu que pour une semence donnée, tous les générateurs (1) d'une même série de dispositifs ou de boîtiers délivrent la même séquence et notamment la même séquence de chiffres.

Cette séquence correspond à une suite d'informations codées ; elle est représentative d'un certain nombre d'éléments entrant dans le fonctionnement d'une interactivité virtuelle, plus longuement détaillée ultérieurement. Cette semence peut être de différente nature, mais plus spécifiquement constituée par un nombre, ou un chiffre communiqué pendant l'émission, et par exemple, apparaissant sur l'écran de télévision, voire plus subtilement une information d'horodatage correspondant typiquement au jour de l'instant de fonctionnement du boîtier. Cet horodatage peut être délivré directement par une horloge interne (2) intégrée dans le micro-contrôleur du boîtier électronique. L'horloge peut être calée sur une horloge de référence, servant au producteur de l'émission lors de la création des différentes épreuves et tests. Par ailleurs, compte tenu des dérives possibles de l'horloge sur une longue période de temps, on a avantage à utiliser des intervalles de temps de grande amplitude, afin de garantir une unicité au niveau de la génération pseudo-aléatoire de la séquence de chiffres.

Lorsque l'on fait appel à une semence introduite par l'utilisateur, celle-ci est introduite par le biais d'un clavier (3) intégré également au boîtier électronique.

Ainsi, l'ensemble des différents boîtiers dispose d'un référentiel commun par rapport auquel des comparaisons pourront être effectuées en fonction de données introduites ultérieurement par l'utilisateur, notamment au cours des émissions de télévision dans le cadre de jeux, de tests, etc..

Corrélativement, le concepteur de l'émission dispose également du même générateur, afin de pouvoir se référer au même référentiel commun à tous les boîtiers électroniques. En d'autres termes, il lui suffit de confectionner une ou différentes épreuves en fonction des réponses et autres suggestions intervenant en cours d'émission, fonction de la séquence pseudo-aléatoire générée par ledit générateur du boîtier électronique.

La séquence de chiffres est donc représentative d'une suite d'informations non accessibles par l'utilisateur et correspondant aux différentes questions sous formes de paramètres, règles et réponses des épreuves à venir en cours d'émission.

Le clavier (3) sert également à l'utilisateur pour introduire une suite de données corespondant aux réponses des questions et autres tests proposés en cours d'émission. Plus précisément, les informations introduites sont tapées en clair sur ledit clavier par le téléspectateur, puis subissent une transformation au niveau du microcontrôleur afin de transférer ces informations sous la forme d'une suite interprétable, par exemple une suite de même nombre que la partie de la suite de chiffres pseudo-aléatoire utilisée. Cette transformation permet d'effectuer ensuite au niveau d'une section d'arbitrage et de contrôle (4) une interprétation (comparaison) de la suite d'informations introduites par l'utilisateur en vue de restituer le résultat du test ou de l'épreuve, par exemple au niveau d'un écran à cristaux liquides (5) intégré dans le boîtier.

En outre, on observe qu'en modifiant la semence de génération de la suite pseudo-aléatoire, il est possible d'obtenir un très grand nombre de suites pseudo-aléatoires, et donc d'augmenter quasiment à l'infini le nombre de possibilités d'une pseudo-interactivité. Il suffit alors au concepteur de l'émission d'adapter les questions et réponses en fonction par exemple de la date programmée de l'émission et de la connaissance de l'algorithme du générateur.

Le téléspectateur n'est pas lui-même conscient de cette interactivité virtuelle, compte tenu qu'il obtient les résultats des tests et autres épreuves auxquels il a participé, ou juste en fin d'émission, selon le type de jeu proposé. C'est la semence introduite dans le générateur qui définit la série de bons résultats, qu'il y aura lieu d'introduire lors de l'émission, les questions étant bien entendu fonction de la connaissance par le concepteur de l'émission de la semence qui va initialiser le générateur et de l'algorithme géré par ce générateur.

De la sorte, on évite ainsi le téléchargement des informations, notamment des paramètres du jeu et autres tests de l'émission, ce qui nécéssite comme déjà dit, d'une part, d'utiliser un système de transmission électrique, optique ou acoustique, et d'autre part, de générer cette information codée à grande vitesse.

Typiquement, le boîtier de l'invention comporte un microcontrôleur (6), alimenté électriquement au moyen par exemple de piles bouton (2). Corrélativement, il reçoit une horloge interne (2) reliée au microcontrôleur, afin de transférer une information d'horodatage comme semence du générateur contenu dans ledit microcontrôleur. Ce dernier est également connecté au clavier (3), d'une part, et à l'organe de restitution sensorielle (5), notamment à un écran à cristaux liquides d'autre part.

Il va être décrit un autre exemple d'application du procédé de l'invention, plus particulièrement destiné aux supports écrits. Ce support écrit peut être constitué d'un hebdomadaire proposant à ses lecteurs un jeu de type intéractif, dont la durée de validité correspond à la semaine d'édition de cet hebdomadaire, et qui s'achève donc à sa parution lors de la semaine suivante (dans l'édition de laquelle il propose un nouveau jeu). Le lecteur dispose du boîtier électronique déjà décrit, dont l'horloge interne donne la date, et dont le microcontrôleur extrait le chiffre correspondant au quantième de la semaine de parution. Ce chiffre va être utilisé par le générateur du microcontrôleur pour paramétrer les bonnes réponses, leur nombre, etc.., et ce, à partir du jour de parution de cet hebdomadaire. Les questions ou tests sont donnés par le journal, le lecteur y répondant successivement en introduisant ses réponses par le clavier du boîtier. A l'issue de cette phase opératoire, le boîtier transmet le résultat de cette épreuve ou test par l'écran à cristaux liquides, ou par le biais d'un synthétiseur de parole. Lors du numéro suivant, c'est à dire, la semaine suivante, la nouvelle semence permet de paramétrer de nouvelles réponses correspondant aux nouvelles questions répertoriées dans le journal.

Une autre application du procédé conforme à l'invention va être maintenant décrite. Cette application concerne un QCM (questionnaire à choix multiples), dont le support peut être télévisuel. L'émission de délévision propose au télespectateur des questions à réponses multiples basées, par exemple sur la présentation d'un clip vidéo. Cet exemple comporte six questions avec un éventail de réponses compris entre 1 et 4. La semence initiant le générateur pseudo-aléatoire, constitué dans le cas présent d'un registre à décalage, provient de l'horodatage interne au boîter électronique de l'utilisateur.

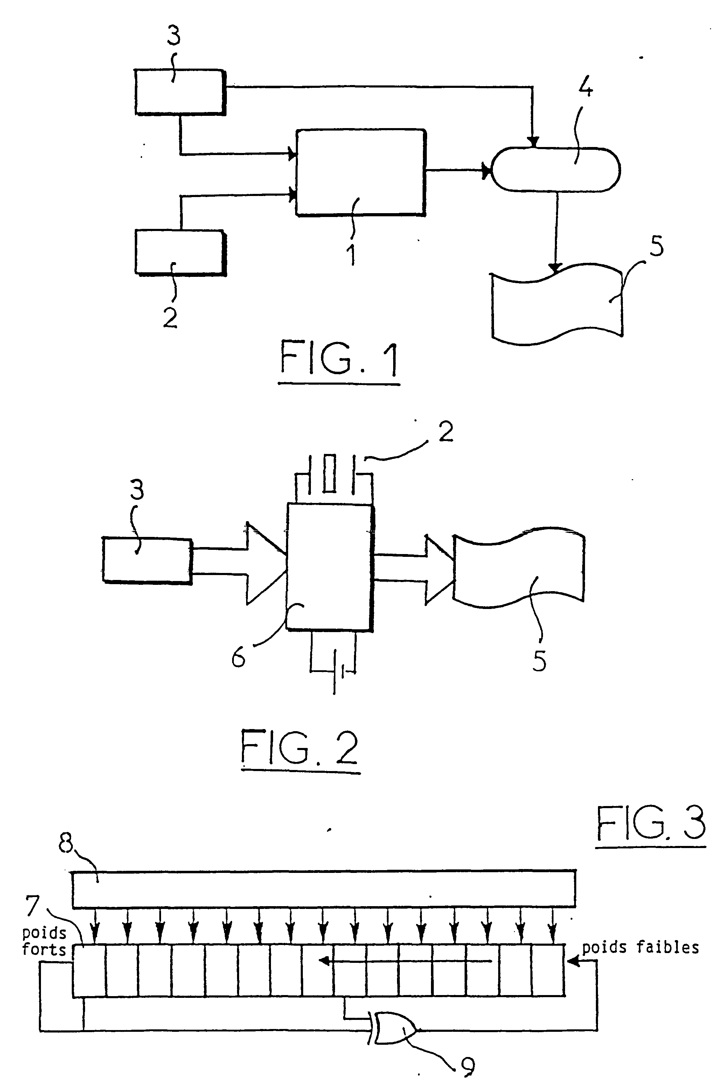

Le registre à décalage a été représenté par la référence générale (7) dans la figure 3. Il est réalisé au moyen d'une fonction cablée, mais il est clair que sa réalisation pourrait être obtenue par une logique programmée. Il est connecté à un organe d'horodatage (8), et deux de ses sorties sont reliées à une porte logique OU exclusif (9), dont la sortie est elle-même connectée à l'entrée dudit registre.

La fonction horodatage est introduite sous forme binaire codée décimale, par transformation du quantième de l'année en binaire, en affectant arbitrairement la valeur d'une unité à un jour plein.

Par exemple, le Mardi 27 Novembre 1990, c'est à dire le 331ème jour de l'année peut être représenté en binaire par le nombre :

| | | | |
|---|---|---|---|
| 0 | 3 | 3 | 1 |
| 000 | 0011 | 0011 | 0001 |

En chargeant le registre à décalage, décrit ci-dessus, et en effectuant plusieurs itérations, on obtient la suite de valeurs binaires répertoriées dans le tableau ci-dessous.

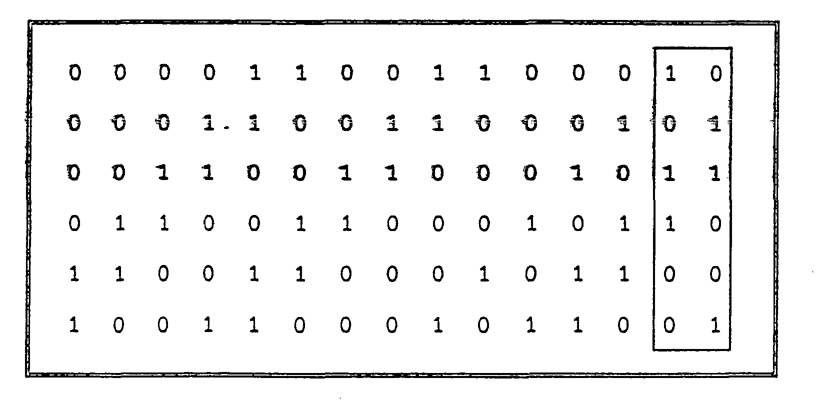

En affectant la valeur du registre (ou une partie) de chaque itération aux réponses aux questions du jeu, on peut ainsi obtenir, pour un jeu composé de six questions de type QCM, dont chacune d'entre elles propose un éventail de quatre réponses possibles comprises entre 1 et 4, les valeurs suivantes :

| | |
|---|---|
| Question 1 | Bonne réponse : 3 |
| 2 | 2 |
| 3 | 4 |
| 4 | 3 |
| 5 | 1 |
| 6 | 2 |

Pour ce faire, on utilise par exemple, dans le cas présent, les deux bits de poids faible, c'est à dire correspondant aux deux colonnes de droite encadrées dans le tableau ci-dessus. On obtient ainsi des valeurs binaires comprises entre 0 0 et 1 1, c'est à dire entre 0 et 3, qu'il suffit d'augmenter d'une unité pour obtenir un intervalle compris entre 1 et 4.

Connaissant ce résultat, suite aux itérations du registre à décalage, le préparateur du jeu n'a plus qu'à prévoir les questions en tenant compte des résultats donnés par le générateur.

Le téléspectateur introduit sa propre séquence de réponses, qui sera comparée à la séquence clé référence, à savoir 3-2-4-3-1-2, et ce :
- soit pas à pas, et dans ce cas le téléspectateur est informé après chaque question, en temps réel, de l'exactitude ou du caractère erroné de sa réponse, par un affichage de type à cristaux liquides,
- soit dans sa totalité, à la fin du jeu, de manière facultative, il pourra lui être affiché son score, toujours par le biais d'un afficheur à cristaux liquides.

En outre, un délai de réponse pour chacune des questions peut être introduit, pour paramétrer le jeu, et cela en exploitant différemment la suite de valeurs binaires déterminée par le registre à décalage.

Selon une première variante de l'invention, la semence d'horodatage introduite dans le générateur est associée avec une semence introduite par l'utilisateur sous forme codée. La donnée horodatée, et par exemple le jour, induit au niveau du générateur (1), et comme dans le cas précédent, une séquence pseudo-aléatoire de chiffres, selon un algorithme commun à tous les boîtiers électroniques et connu par le concepteur de l'émission de télévision. Ce dernier, connaissant en outre la semence initialisatrice, en l'occurence le jour de programmation de l'émission, est à même de réaliser toute sorte de jeux, tests, etc ..., qui ne seront valables que durant cette journée.

En outre, lors du commencement de l'émission considérée, le présentateur indique un code spécifique à introduire dans le boîtier, par le biais du clavier, destiné à être comparé en interne, aux codes des émissions possibles désignés pour la journée considérée et définis par la séquence pseudo-aléatoire générée par la donnée d'horodatage. De la sorte, si une correspondance peut être détectée, l'émission peut se dérouler avec le caractère interactif. En revanche, en l'absence de correspondance, un nombre déterminé de tentatives est permis à l'utilisateur à l'issue duquel il est immanquablement rejeté pour une durée déterminée.

Compte tenu que la génération des codes spécifiques des émissions pour une période considérée, à savoir pour une journée, sont indexés sur la donnée d'horodatage, ils varient tous les jours. De la sorte, il devient particulièrement difficile dé détourner le procédé d'interaction.

Dans une autre forme particulièrement avantageuse de l'invention, le code introduit par l'utilisateur sur proposition du présentateur comporte lui-même deux informations :
- une première information est associée à la donnée d'horodatage, afin d'induire au niveau du boîtier, la génération d'une séquence pseudo-aléatoire correspondant non seulement à des émissions définies, mais en outre, au paramétrage des caractéristiques d'une émission bien définie ;
- une seconde information correspond comme dans le cas précédent à une clé électronique, destinée à vérifier la validité du code, par exemple au moyen d'une loi mathématique connue du boîtier.

De la sorte, on optimise le nombre de possibilités d'interactions au cours d'une même période de validité d'une séquence pseudo-aléatoire de base.

Pour les applications nécessitant un synchronisme rigoureux, voire parfait entre le comportement du boîtier et l'émission du support d'informations, on associe au boitier, selon l'une des caractéristiques de l'invention, un organe apte à assurer cette synchronisation.

Cet organe de synchronisation peut être constitué par un simple bouton-poussoir intégré dans le boîtier électronique, actionné par l'utilisateur au moment indiqué par l'animateur, par exemple, de l'émission de télévision.

Dans une autre forme de réalisation de l'invention, ce top de synchronisation est transmis automatiquement au boîtier au moyen d'une onde porteuse, et typiquement un signal hertzien, une onde radio, voire un signal lumineux ou sonore. Ce boîtier électronique est alors muni d'un récepteur approprié, apte à transmettre au circuit électronique, le top de synchronisation. Dans une variante, le boîtier muni d'un microphone, est à même de reconnaitre une mélodie ou un "jingle" précédent l'émission. On pourrait également concevoir la transmission de ce top sous la forme d'un signal électrique porté par le signal TV, le boîtier étant alors relié électriquement au récepteur de télévision.

Ce "Top" de synchronisation peut en outre être constitué par la simple introduction du code par l'utilisateur par le biais du clavier (3).

Cette synchronisation étant réalisée, on fixe ainsi le temps origine t₀ du départ de l'interactivité. Le jeu ou le test (ou analogue) peut alors démarrer, l'utilisateur utilisant le clavier (3) comme organe d'introduction de données, c'est-à-dire, comme organe d'introduction des réponses qui lui sont soumises. Plus précisément, les informations introduites sont tapées en clair sur le clavier par le télespectateur, puis subissent une transformation au niveau du microcontrôleur afin de transférer ces informations sous la forme d'une suite interprétable, par exemple une suite de chiffres de même nombre que la partie de la suite périodique utilisée. En d'autres termes, cette transformation permet d'effectuer ensuite au niveau d'une section d'arbitrage et de contrôle (4) une interprétation (comparaison) de la suite d'informations introduites par l'utilisateur en vue de restituer le résultat du test ou de l'épreuve, par exemple au niveau d'un écran à cristaux liquides (5) intégré dans le boîtier. Cette restitution peut donc s'effectuer en temps réel, directement sans pour autant avoir recours à une interactivité réelle entre l'émission de télévision et le boîtier de l'utilisateur.

Il va être décrit ci-après un exemple pratique d'une application du procédé conforme à l'invention. Un télespectateur possède un sifflet intégrant le circuit électronique décrit précédemment. En d'autres termes, le boîtier électronique est constitué par le sifflet proprement dit. Sur le récepteur de télévision défile un film, au sein duquel une automobiliste circule dans une agglomération et commet des infractions. Le télespectateur est invité à signaler chacune de ces infractions en sifflant. Cette action de siffler, hormis l'aspect purement sensoriel, génère un signal d'entrée interprété par le circuit électronique comme une donnée introduite par le télespectateur, et destinée à être comparée avec la suite pseudo-aléatoire générée, par exemple suite à un top de synchronisation consécutif à l'introduction dans le boîtier du code de validation de la séquence pseudo-aléatoire par l'utilisateur. S'il siffle correctement, on peut prévoir d'associer au sifflet un écran à cristaux liquides qui matérialise les coups de sifflet corrects. On peut également prévoir de matérialiser en fin de jeu le relevé des différentes réponses apportées par le téléspectateur.

Les différents intervalles de temps séparant deux réponses successives, sont préalablement prévus par la génération pseudo-aléatoire, et utilisés par le concepteur de l'émission.

La donnée externe peut également être utilisée pour modifier l'interprétation des données introduites par l'utilisateur. Par exemple, dans le cadre d'un jeu, le joueur doit atteindre une valeur déterminée par le générateur. Il rentre dans le boîtier une série limitée de nombres, qui subit un traitement mathématique déterminé, par exemple une addition, dont le résultat est comparé à la valeur déterminée à atteindre. Dans une version évoluée de cette application, le générateur génère également une fourchette à l'intérieur de laquelle doit se situer le résultat du traitement pour gagner, permettant ainsi de renseigner le joueur dès la fin du jeu de son score. En outre, ce type de jeu peut être couplé avec un serveur central, au niveau duquel sont enregistrés les scores des différents joueurs, afin d'établir une hierarchie, et donc un gagnant.

On observe donc que le procédé conforme à l'invention permet d'aboutir à une interactivité virtuelle, dont la mise en oeuvre se trouve simplifiée de par la synchronisation systématique que l'on peut prévoir.

Ce procédé est donc particulièrement adapté à tous les systèmes interactifs, et plus particulièrement à de tels systèmes dans lesquels le support de l'interaction est constitué par une émission télévisée ou radiophonique.

## Revendications

1. Procédé pour matérialiser une interactivité virtuelle entre d'une part, un utilisateur muni d'un boîtier électronique comprenant un circuit électronique équipé d'un générateur pseudo-aléatoire (1) et un organe d'introduction de données (3), et d'autre part, un support d'informations proposant au moins une épreuve suggérant des réponses, dans lequel
- on génère au niveau du boîtier électronique une première suite de chiffres agencée selon une logique pseudo-aléatoire, par le biais du générateur (1) intégré dans ledit circuit électronique, à partir au moins d'une première donnée et d'une donnée externe de co-ensemencement introduites dans ledit générateur, cette première suite de chiffres étant représentative d'une suite d'informations non accessibles par l'utilisateur, les réponses suggérées par l'épreuve dudit support d'informations étant corrélées directement ou indirectement avec cette première suite de chiffres;
- on transforme une suite de données introduites par l'utilisateur, par le biais de l'organe (3) d'introduction de données, et représentatives des choix et réponses dudit utilisateur à ladite épreuve, sous la forme d'une deuxième suite de chiffres interprétables par rapport à la première suite de chiffres ;
- on compare les deux suites de chiffres au niveau du circuit électronique ; et
- on restitue au niveau du boîtier le résultat de cette comparaison sous la forme de signaux sensoriels.

2. Procédé selon la revendication 1, **caractérisé par le fait que** la première donnée est une donnée dite d'horodatage issue d'une information d'horodatage.

3. Procédé selon la revendication 2, **caractérisé par le fait que** l'information d'horodatage est délivrée par une horloge (2) interne au boîtier ou par l'intermédiaire d'une réception de signaux radiodiffusés.

4. Procédé selon la revendication 3, **caractérisé en ce que** l'information d'horodatage est obtenue en découpant le temps en intervalles déterminés, de grande amplitude.

5. Procédé selon la revendication 4, **caractérisé en ce que** les intervalles déterminés sont choisis centrés sur les périodes d'utilisation du boîtier.

6. Procédé selon l'une des revendications précédentes, **caractérisé par le fait que** la comparaison entre les deux suites de chiffres s'effectue pas à pas lors de l'introduction de la suite de données par l'utilisateur, ou bien globalement à la fin de l'épreuve.

7. Procédé selon l'une des revendications 1 à 6, **caractérisé par le fait qu'**on introduit une donnée externe de paramétrage au niveau du générateur (1).

8. Procédé selon l'une des revendications 1 à 6, **caractérisé en ce que** l'on introduit dans le boîtier une donnée externe d'interprétation et on transforme ladite première suite de chiffres en utilisant ladite donnée externe d'interprétation, préalablement à son traitement comparatif avec la deuxième suite de chiffres.

9. Procédé selon l'une des revendications 1 à 6, **caractérisé en ce que** l'on introduit dans le boîtier électronique une donnée externe d'interprétation et on transforme ladite deuxième suite de chiffres en utilisant ladite donnée externe d'interprétation, préalablement à son traitement comparatif avec la première suite de chiffres.

10. Procédé selon l'une des revendications précédentes, **caractérisé en ce que** l'on introduit une donnée externe de synchronisation dans le boîtier électronique, qui agit comme signal de synchronisation afin d'assurer la correspondance entre le séquencement d'événements intervenant au niveau du support d'informations, et un séquencement déterminé par la première suite de chiffres issue du générateur pseudo-aléatoire.

11. Procédé selon l'une des revendications précédentes, **caractérisé par le fait que** la donnée externe est introduite dans le boîtier par l'intermédiaire de l'organe (3) d'introduction de données ou par l'intermédiaire d'une réception de signaux radiodiffusés.

12. Procédé selon l'une des revendications précédentes, **caractérisé par le fait que** le support d'informations est une émission télévisée ou radiophonique.

13. Boîtier électronique permettant la matérialisation d'une interactivité virtuelle entre un utilisateur et un support d'informations proposant au moins une épreuve suggérant des réponses, comprenant un circuit électronique comportant un générateur pseudo-aléatoire (1), et un organe d'introduction de données (3), des moyens (2) de délivrance d'une première donnée et des moyens de réception d'une donnée externe de co-ensemencement, le générateur pseudo-aléatoire (1) générant en réponse au moins à la première donnée et à la donnée externe de co-ensemencement, une première suite de chiffres agencée selon une logique pseudo-aléatoire, cette première suite étant représentative d'une suite d'informations non accessibles par l'utilisateur et corrélées directement ou indirectement aux réponses suggérées par l'épreuve dudit support d'informations, le circuit électronique comprenant en outre un microcontrôleur comportant des moyens de transformation d'une suite de données introduites par l'utilisateur par le biais de l'organe (3) d'introduction de données, et représentatives des choix et réponses de celui-ci, sous la forme d'une deuxième suite de chiffres interprétables par rapport à la première suite de chiffres, ainsi qu'une section d'arbitrage et de contrôle (4) pour comparer les deux suites de chiffres, et le boîtier comprenant en outre des moyens (5) de restitution du résultat de cette comparaison sous la forme de signaux sensoriels.

14. Boîtier selon la revendication 13, **caractérisé par le fait que** les moyens de réception de la donnée externe de co-ensemencement comportent l'organe d'introduction de données (3) connecté au microcontrôleur.

15. Boîtier selon la revendication 13 ou 14, **caractérisé par le fait que** les moyens de délivrance de la première donnée comportent une horloge interne (2) délivrant une information d'horodatage.

16. Boîtier selon l'une des revendications 13 à 15, **caractérisé par le fait qu'**il comprend un récepteur de signaux radiodiffusés incorporant les moyens de réception de la donnée externe de co-ensemencement et/ou les moyens de délivrance de la première donnée.

## Patentansprüche

1. Verfahren zum Verwirklichen einer virtuellen Interaktivität zwischen einem Benutzer, der mit einem elektronischen Gerät ausgerüstet ist, das eine elektronische Schaltung umfaßt, die einen Pseudozufallsgenerator (1) und eine Dateneingabeeinrichtung (3) umfaßt, einerseits und einem Informationsträger andererseits, der wenigstens einen Test anbietet, der Reaktionen nahelegt, bei dem
- man auf der Höhe des elektronischen Gerätes eine erste Folge von Ziffern, die nach einer Pseudozufallslogik zusammengestellt ist, über den Generator (1) erzeugt, der in die elektronische Schaltung integriert ist, und zwar ausgehend von wenigstens einem ersten Wert und einem externen Startwert, die in den Generator eingegeben werden, welche erste Folge von Ziffern eine Folge von Informationen wiedergibt, die für den Benutzer nicht zugänglich sind, wobei die vom Test nahegelegten Reaktionen des Informationsträgers direkt oder indirekt mit der ersten Folge von Ziffern korreliert sind,
- man eine Folge von Werten, die vom Benutzer über die Dateneingabeeinrichtung (3) eingegeben werden und die die Wahlen und Reaktionen des Benutzers bei dem besagten Test wiedergeben, in die Form einer zweite Folge von Ziffern umwandelt, die im Vergleich zur ersten Folge von Ziffern interpretierbar sind,
- man die beiden Ziffernfolgen auf der Höhe der elektronischen Schaltung vergleicht und
- man auf der Höhe des Gerätes das Ergebnis dieses Vergleiches in Form von sinnlich wahrnehmbaren Signalen wiedergibt.

2. Verfahren nach Anspruch 1, **dadurch gekennzeichnet, daß** der erste Wert ein Wert ist, der Zeitwert genannt wird und von einer Zeitinformation stammt.

3. Verfahren nach Anspruch 2, **dadurch gekennzeichnet, daß** die Zeitinformation von einem Zeitgeber (2) im Inneren des Gerätes oder über den Empfang von Rundfunksignalen kommt.

4. Verfahren nach Anspruch 3, **dadurch gekennzeichnet, daß** die Zeitinformation dadurch erhalten wird, daß die Zeit in bestimmte Intervalle mit großer Amplitude geteilt wird.

5. Verfahren nach Anspruch 4, **dadurch gekennzeichnet, daß** die bestimmten Intervalle so gewählt werden, daß sie zu den Benutzungsperioden des Gerätes zentriert sind.

6. Verfahren nach einen der vorhergehenden Ansprüche, **dadurch gekennzeichnet, daß** der Vergleich zwischen den beiden Ziffernfolgen schrittweise bei der Eingabe der Folge von Werten durch den Benutzer oder auch global am Ende des Tests erfolgt.

7. Verfahren nach einem der Ansprüche 1 bis 6, **dadurch gekennzeichnet, daß** man einen externen Parameterwert auf der Höhe des Generators (1) eingibt.

8. Verfahren nach einem der Ansprüche 1 bis 6, **dadurch gekennzeichnet, daß** man in das Gerät einen externen Interpretationswert eingibt und man die besagte erste Folge von Ziffern umwandelt, indem man den besagten externen Interpretationswert verwendet und zwar bevor sie komparativ mit der zweiten Ziffernfolge verarbeitet wird.

9. Verfahren nach einem der Ansprüche 1 bis 6, **dadurch gekennzeichnet, daß** man in das elektronische Gerät einen externen Interpretationswert eingibt und man die besagte zweite Ziffernfolge dadurch umwandelt, daß man den besagten externen Interpretationswert verwendet, bevor diese komparativ mit der ersten Ziffernfolge verarbeitet wird.

10. Verfahren nach einem der vorhergehenden Ansprüche, **dadurch gekennzeichnet, daß** man einen externen Synchronwert in das elektronische Gerät eingibt, der wie ein Synchronsignal wirkt, um die Entsprechung zwischen der Abfolge von Ereignissen, die auf der Höhe des Informationsträgers auftreten, und der Abfolge sicherzustellen, die durch die erste Ziffernfolge bestimmt ist, die vom Pseudozufallsgenerator kommt.

11. Verfahren nach einem der vorhergehenden Ansprüche, **dadurch gekennzeichnet, daß** der externe Wert in das Gerät über die Dateneingabeeinrichtung (3) oder über den Empfang von Rundfunksignalen eingegeben wird.

12. Verfahren nach einem der vorhergehenden Ansprüche, **dadurch gekennzeichnet, daß** der Informationsträger eine Fernsehoder Rundfunksendung ist.

13. Elektronisches Gerät, das die Verwirklichung einer virtuellen Interaktivität zwischen einem Benutzer und einem Informationsträger erlaubt, der wenigstens einen Test anbietet, der Reaktionen nahelegt, mit einer elektronischen Schaltung, die einen Pseudozufallsgenerator (1) und eine Dateneingabeeinrichtung (3), Einrichtungen (2) zum Liefern eines ersten Wertes und Einrichtungen zum Empfangen eines externen Startwertes umfaßt, wobei der Pseudozufallsgenerator (1) auf den wenigstens einen ersten Wert und den externen Startwert ansprechend eine erste Folge von Ziffern erzeugt, die nach einer Pseudozufallslogik zusammengestellt sind, die erste Folge eine Folge von Informationen wiedergibt, die für den Benutzer nicht zugänglich sind und direkt oder indirekt mit den vom Test des besagten Informationsträger vorgeschlagenen Reaktionen korreliert sind, die elektronische Schaltung weiterhin eine Mikrosteuerung umfaßt, die Einrichtungen zum Umwandeln einer Folge von Werten, die vom Benutzer über die Dateneingabeeinrichtung (3) eingegeben werden und die dessen Wahlen und Reaktionen wiedergeben, in die Form einer zweiten Folge von Ziffern, die im Vergleich zur ersten Folge von Ziffern intepretierbar sind, sowie einen Entscheidungs- und Steuerteil (4) umfaßt, um die beiden Ziffernfolgen zu vergleichen, und das Gerät weiterhin Einrichtungen (5) zum Wiedergeben des Ergebnisses des Vergleiches in Form sinnlich wahrnehmbarer Signale umfaßt.

14. Gerät nach Anspruch 13, **dadurch gekennzeichnet, daß** die Einrichtungen zum Empfangen des externen Startwertes die Dateneingabeeinrichtungen (3) umfaßt, die mit einer Mikrosteuerung verbunden sind.

15. Gerät nach Anspruch 13 oder 14, **dadurch gekennzeichnet, daß** die Einrichtungen zum Liefern des ersten Wertes einen internen Zeitgeber (2) umfassen, der eine Zeitinformation liefert.

16. Gerät nach einem der Ansprüche 13 bis 15, **dadurch gekennzeichnet, daß** es einen Rundfunksignalempfänger umfaßt, in den die Einrichtungen zum Empfangen des externen Startwertes und/oder die Einrichtungen zum Liefern des ersten Wertes enthalten sind.

## Claims

1. A method of realizing virtual interactivity between, on the one hand, a user provided with an electronic module including an electronic circuit equipped with a pseudo-random generator (1) and a data entry member (3), and, on the other hand, an information medium offering at least one test suggesting responses, in which method
- a first series of digits is generated in the electronic module, arranged in accordance with a pseudo-random logic, by means of the generator (1) integrated into said electronic circuit, from at least one first item of data introducing into said generator, said first series of digits being representative of a sequence of information not accessible to the user, the suggested responses of the test on said information medium being correlated directly or indirectly with said first series of digits;
- a series of data introduced by the user via the data entry member (3) and representative of choices and responses of said user to said test is converted into the form of a second series of digits that can be interpreted relative to the first series of digits;
- the two series of digits are compared in the electronic circuit; and
- the result of the comparison is reproduced in the module in the form of sensory signals.

2. A method according to claim 1, **characterized in that** the first item of data is a time and date item of data obtained from time and date information.

3. A method according to claim 2, **characterized in that** the time and date information is supplied by a clock (2) in the module or by received radio broadcast signals.

4. A method according to claim 3, **characterized in that** the time and date information is obtained by dividing time into particular long intervals.

5. A method according to claim 4, **characterized in that** the intervals chosen are centered on the periods of use of the module.

6. A method according to any preceding claim, **characterized in that** the two series of digits are compared step by step when the series of data is entered by the user or all at once at the end of the test.

7. A method according to any of claims 1 to 6, **characterized in that** an external item of parametering data is introduced into the generator (1).

8. A method according to any of claims 1 to 6, **characterized in that** an external item of interpretation data is introduced into the module and said first series of digits is converted using said external item of interpretation data before the comparative processing thereof with the second series of digits.

9. A method according to any of claims 1 to 6, **characterized in that** an external item of interpretation data is introduced into the electronic module and said second series of digits is converted using said external item of interpretation data before the comparative processing thereof with the second series of digits.

10. A method according to any preceding claim, **characterized in that** an external item of synchronization data is introduced into the electronic module and acts as a synchronization signal to ensure a corresponding relationship between the sequence of events operative at the level of the information medium and an internal sequence determined by the first series of digits from the pseudo-random generator.

11. A method according to any preceding claim, **characterized in that** the external item of data is introduced into the module via the data entry member (3) or by receiving broadcast radio signals.

12. A method according to any preceding claim, **characterized in that** the information medium is a television or radio broadcast.

13. An electronic module for realizing virtual interactivity between a user and an information medium offering at least one test suggesting responses, said module including an electronic circuit including a pseudo-random generator (1), and a data entry member (3), and means (2) for delivering a first item of data and means for receiving an external item of co-seeding [sic] data, the pseudo-random generator (1) generating in response at least to the first item of data and the external item of co-seeding [sic] data a first series of digits arranged in accordance with a pseudo-random logic, said first series being representative of a sequence of information not accessible to the user and correlated directly or indirectly with the responses suggested by the test on said information medium, the electronic circuit further including a microcontroller including means for converting a series of data introduced by the user via the data entry member (3) and representative of the choices and responses of the user into the form of a second series of digits that can be interpreted relative to the first series of digits, and an arbitration and control section (4) for comparing the two series of digits, and the module further including means (5) for reproducing the result of said comparison in the form of sensory signals.

14. A module according to claim 13, **characterized in that** the means for receiving an external item of co-seeding [sic] data include the data entry number (3) connected to the microcontroller.

15. A module according to claim 13 or claim 14, **characterized in that** the means for delivering the first item of data include an internal clock (2) delivering time and date information.

16. A module according to any of claims 13 to 15, **characterized in that** it includes a receiver of broadcast radio signals incorporating the means for receiving the external item of co-seeding [sic] data and/or the means for delivering the first item of data.
